# EUROPEAN PATENT APPLICATION

(11) **EP 3 543 509 A1**
(43) Date of publication of application: **25.09.2019**
(21) Application number: 19158352.5
(22) Date of filing: 20.02.2019
(51) Int. Cl.: F02C 7/24, F01D 25/12, F02C 7/32, B64D 33/08

(54) **GAS TURBINE ENGINE HEATSHIELD**

(30) Priority: 20.03.2018 GB 201804397
(71) Applicant: Rolls-Royce plc, London SW1E 6AT (GB)
(72) Inventor: Ingley, Lucian, Derby, Derbyshire DE24 8BJ (GB); Savings, David, Derby, Derbyshire DE24 8BJ (GB); Ditheridge, William, Derby, Derbyshire DE24 8BJ (GB)
(74) Representative: Rolls-Royce plc

(57) **Abstract**

A gas turbine engine is provided for an aircraft. The engine includes an engine core comprising a turbine, a compressor, and a core shaft connecting the turbine to the compressor. The engine further includes core casings surrounding the engine core. The engine further includes one or more engine accessories mounted adjacent to the core casings. The engine further includes a self-supporting heatshield positioned between the one or more engine accessories and the core casings. The heatshield is formed of ceramic matrix composite material.

## Description

The present disclosure relates to a heatshield for a gas turbine engine, and in particular a heatshield for engine accessories of the engine.

Conventionally the accessory gearbox of an aircraft gas turbine engine is mounted within the outer engine nacelle in a location beneath the engine. The gearbox is connected to the engine core by a radial drive shaft. The gearbox provides power to other accessories such as an auxiliary generator and pumps for hydraulic fluid, fuel, oil etc.

Although effective in that the gearbox is kept away from the hot environment of the engine core, the location of the gearbox within the outer nacelle is disadvantageous in that it requires a relatively significant amount of space within the nacelle, which can increase the overall diameter of the nacelle, leading to weight and drag increase and adverse specific fuel consumption.

In alternative arrangements, it is possible to locate the accessory gearbox and other accessories in an engine zone directly outside the casings which surround the engine core. The accessories are mounted to the casings by brackets, short spars or bosses. However, the high temperature environment near the engine core can produce thermal loads which can reduce component reliability.

To protect against these loads, an option is to locate a heatshield between the engine accessories and the core casings. The heatshield can protect the accessories against heat radiated from the core casings so that, while the engine is in use, a flow of cooling air diverted from the bypass flow produced by the engine's propulsive fan and used to ventilate the engine zone reduces the temperature experienced by the accessories. Such a heatshield can be formed of thermal blanket-type insulation. However, a disadvantage of this insulation is that it requires support structures, which occupy space and increase weight.

Accordingly, the present disclosure provides a gas turbine engine for an aircraft, the engine including:
an engine core comprising a turbine, a compressor, and a core shaft connecting the turbine to the compressor;
core casings surrounding the engine core; and
one or more engine accessories mounted adjacent to the core casings;
wherein the engine further includes a self-supporting heatshield positioned between the one or more engine accessories and the core casings, the heatshield being formed of ceramic matrix composite material.

Advantageously by adopting a self-supporting heatshield the support structures required by thermal blanket-type insulation can be avoided, saving space and weight. In addition, ceramic matrix composites (CMCs) generally have the ability to withstand high temperatures and high thermal gradients. Moreover they typically have relatively low thermal conductivities. This combination of properties makes them attractive for forming the heatshield. However, CMCs also generally have significantly better strength and toughness than unreinforced ceramics. Thus they are suitable for forming into a heatshield which is self-supporting and which is able to withstand the mechanical (typically vibrational) loads associated with locations near the engine core.

Optional features of the present disclosure will now be set out. These are applicable singly or in any combination with any aspect of the present disclosure.

The heatshield may be formed as a corrugated sheet. By corrugating the heatshield, it can be strengthened without significantly increasing its mass.

The CMC material of the heatshield may be formed of oxide-oxide (e.g. alumina-alumina), SiC-SiC, C-SiC etc. The CMC can be reinforced by long fibres, short fibres, whiskers and/or particulates. The CMC may be manufactured, for example, by hand or automated layup, followed by cure under pressure and temperature, and then sinter. The heatshield may be formed as a unitary CMC body which conforms to the contours of the one or more engine accessories. Another option, however, is for the heatshield to be formed by plural CMC plates. For example, these plates can be mounted in respective apertures of a metal frame. This then still allows the heatshield to conform to the contours of the one or more engine accessories, while simplifying manufacture of the CMC.

Conveniently, the one or more engine accessories may be mounted vertically beneath the core casings. The heatshield may then contain drainage holes located at the bottoms of depressions formed in the heatshield by the corrugations. In general, it is a requirement of an aero gas turbine engine that any engine liquids do not pool where they may constitute a fire hazard. Examples of such liquids are fuel, lubricating oil or hydraulic liquid issuing from a leaking pipe or component. If the liquid falls on the heatshield it is thus helpful if there is a route for it to drain away. Advantageously, with the corrugated heatshield, the liquid automatically accumulates in the depressions and can then drain away through the drainage holes.

The one or more engine accessories may include an engine accessory gearbox driven by a take-off (e.g. radial drive shaft) from the core shaft.

Other of the engine accessories can include, for example, any one or more of an electrical power generator, a fuel pump, an oil pump, a hydraulic pump, and an engine starter motor.

The engine accessory gearbox may include a train of spur gears which transfer the drive to other engine accessories. For example, the spur gears of the train may be arranged in a line with their axes of rotation extending perpendicularly to the engine's principal rotation axis. In particular, the line may extend in a direction which is substantially parallel with the engine axis. This is in contrast with many conventional engine accessory gearboxes, where the train of spur gears extend around a circumferential direction of the engine.

The train of spur gears may be mounted along a central spine member, the other engine accessories projecting from opposite sides of the spine member and the heatshield being supported along a top surface of the spine member.

The gas turbine engine may further include an aerodynamic (inner) cowl which surrounds the engine core, the core casings and the one or more engine accessories.

The gas turbine engine may further include a propulsive fan located upstream of the engine core, the fan generating a core airflow which enters the core engine and a bypass airflow which enters a bypass duct surrounding the engine core. The bypass duct thus typically surrounds at least a forward portion of the above-mentioned aerodynamic cowl. The bypass duct is typically surrounded by its own aerodynamic (outer) cowl or nacelle.

Arrangements of the present disclosure may be particularly, although not exclusively, beneficial for fans that are driven via a power gearbox. Accordingly, the gas turbine engine may comprise a power gearbox that receives an input from the core shaft and outputs drive to the fan so as to drive the fan at a lower rotational speed than the core shaft. The input to the power gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The power gearbox may be arranged to be driven by the core shaft that is configured to rotate (for example in use) at the lowest rotational speed (for example the first core shaft in the example above). For example, the power gearbox may be arranged to be driven only by the core shaft that is configured to rotate (for example in use) at the lowest rotational speed (for example only be the first core shaft, and not the second core shaft, in the example above). Alternatively, the power gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a power gearbox for a gas turbine engine;
Figure 4 shows schematically another sectional side view of a gas turbine engine having an accessory gearbox and other accessories mounted adjacent to the core casings, with ventilation flows while the engine is running indicated by dashed arrowed lines;
Figure 5 shows schematically a heatshield for the accessory gearbox and other accessories;
Figure 6 shows schematically a variant heatshield for the accessory gearbox and other accessories; and
Figure 7 shows schematically a further variant heatshield.

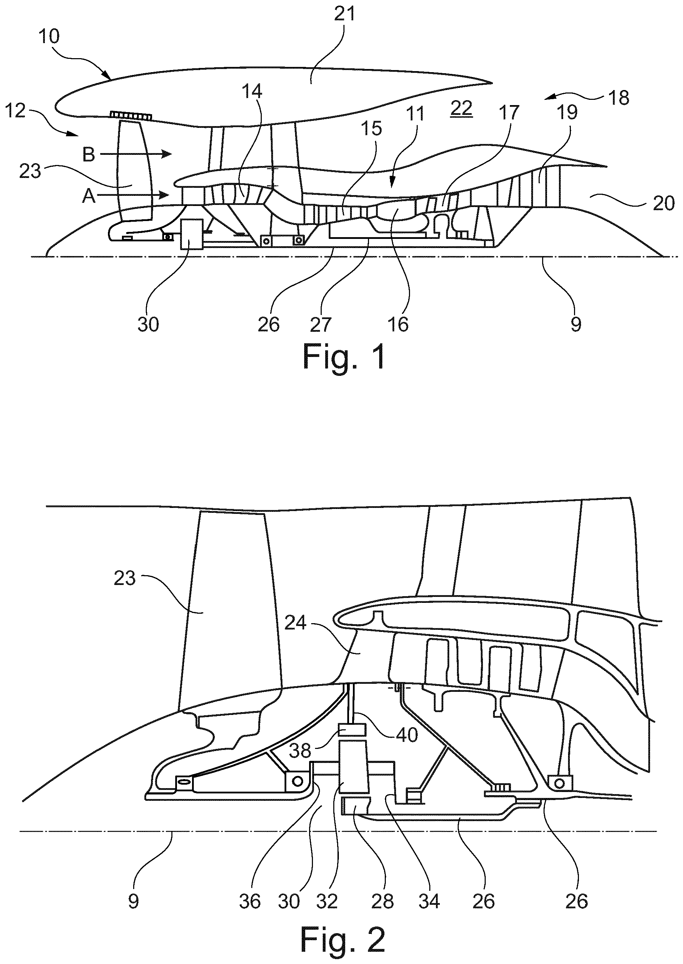

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic power gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

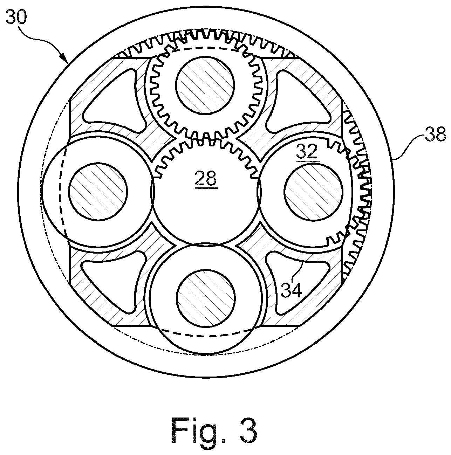

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of a further example, any suitable arrangement of the bearings between rotating and stationary parts of the engine (for example between the input and output shafts from the gearbox 30 and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of power gearbox styles (for example star or planetary), support structures, input and output shaft arrangement, and bearing locations.

Optionally, the power gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

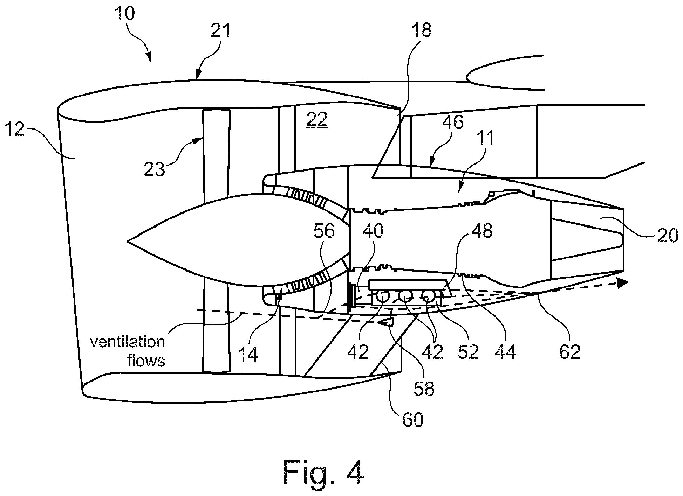

Figure 4 shows schematically another sectional side view of the gas turbine engine 10. An engine zone is bounded on a radially outer side by an aerodynamic inner cowl 46 which forms the inner wall of the bypass duct 22, and on an inner side by core casings 44 of the engine core 11. Within the zone, an accessory gearbox 40 driven by a take-off (such as a radial drive shaft) from the core shaft 26 is mounted adjacent to and vertically beneath the core casings, along with other accessories 42 driven by the gearbox 40. The other accessories 42 may include any one or more of a power generator, a fuel pump, an oil pump, a hydraulic pump, and an engine starter motor. To protect the gearbox 40 and other accessories 42 from the high temperatures of the engine core 11, a heatshield 48 is positioned between the gearbox 40 and accessories 42,

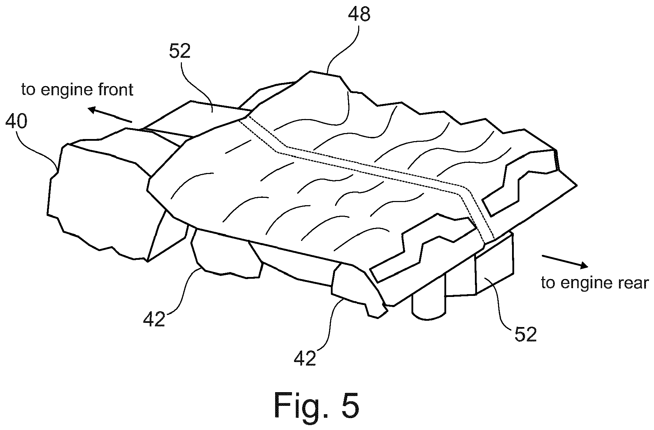

As shown in more detail in Figure 5, the engine accessory gearbox 40 has a front end that receives the drive from the drive shaft 26 and has a train of spur gears which transfer the drive to the other engine accessories 42. These spur gears are arranged in a line along a central spine member 52, with the engine accessories 42 projecting from opposite sides of the spine member 52. The central spine member 52 extends substantially parallel to the engine axis 9 with the rotation axes of the spur gears perpendicular to the engine axis, and the engine accessory gearbox 40 is thus in contrast with a more conventional circumferentially extending accessory gearbox arrangement.

The heatshield 48 is conveniently attached to an upper surface of the spine member 52. It is formed as a corrugated sheet that conforms broadly to the contours of the upper surface of the assembly of the gearbox 40, accessories 42 and spine member 52. More particularly, the heatshield 48 extends laterally to either side of the spine member 52 to cover top surfaces of the gearbox 40 and accessories 42. It is self-supporting, with the corrugations helping to stiffen and strengthen the sheet. Conveniently, the heatshield 48 is formed of CMC material, which provides good thermal and mechanical properties for this application. By forming the heatshield 48 as a self-supporting sheet, which is typically of uniform thickness, it is possible to avoid complex-shaped stress-raising features that would otherwise be associated with stiffening and/or support structures.

When the engine is running, ventilation flows (indicated by arrowed dashed lines in Figure 4) are diverted into the engine zone from the bypass air flowing through the bypass duct 22. These ventilation flows enter the zone through a forward inlet vent 56 at the front of the zone, and an inlet vent 58 formed in a services conduit 60 which extends across the bypass duct 22 from a position beneath the gearbox 40 and accessories 42. The ventilation flows exit the zone at a rearward outlet vent 62, the ventilation flows being maintained by a pressure differential between the inlet and outlet vents. The combination of the thermal insulation provided by the heatshield 48 and the ventilation flows prevents the gearbox 40 and accessories 42 from overheating.

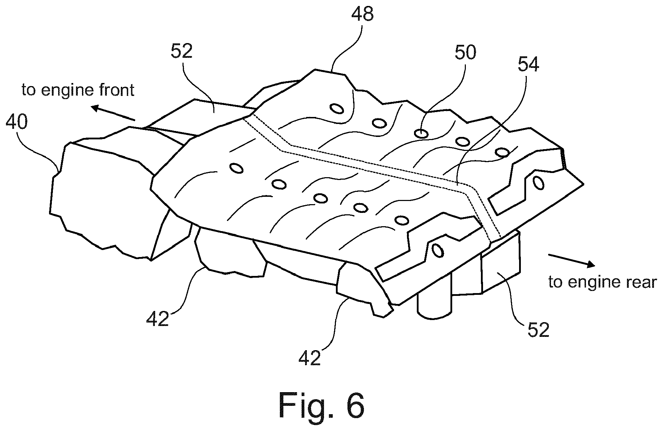

Figure 6 shows schematically a variant heatshield for the accessory gearbox and other accessories. To prevent any aviation liquid (such as fuel, lubricating oil or hydraulic liquid from a leaking pipe or component) accumulating on the heatshield 48, and in particular pooling in the depressions formed by the corrugations and thereby constituting a fire hazard, the variant heatshield has drainage holes 50 formed at the bottoms of the depressions. In this way, liquid can drain downwards through the holes, and ultimately can exit the engine zone through a further drainage hole formed in the lowest point of the inner cowl 46. In addition, liquid can drain off to the rear of the heatshield along a central gutter 54 formed where the heatshield attaches to the spine member 52.

Although not shown in Figures 5 and 6, other holes can be formed in the heatshield 48, e.g. to allow routing of services through the heatshield, or to accommodate upwardly projecting features of the gearbox 40 and accessories 42.

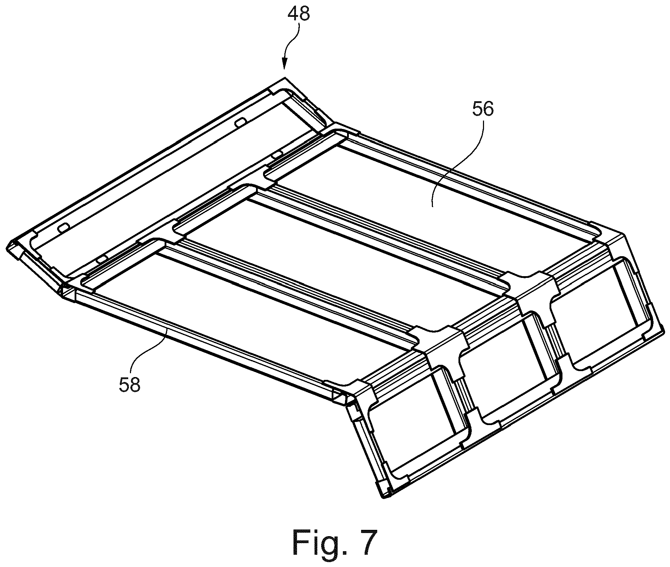

Figure 7 shows schematically a further variant heatshield for the accessory gearbox and other accessories. In this variant, the heatshield is formed by CMC panels 56 mounted in a metal frame 58. This simplifies the manufacture of the CMC, while still allowing the heatshield to conform broadly to the contours of the upper surface of the assembly of the gearbox 40, accessories 42 and spine member 52.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A gas turbine engine (10) for an aircraft, the engine including:
an engine core (11) comprising a turbine (19), a compressor (14), and a core shaft (26) connecting the turbine to the compressor;
core casings (44) surrounding the engine core; and
one or more engine accessories (40, 42) mounted adjacent to the core casings (11);
wherein the engine further includes a self-supporting heatshield (48) positioned between the one or more engine accessories (40, 42) and the core casings, the heatshield being formed of ceramic matrix composite material.

2. A gas turbine engine (10) according to claim 1, wherein the one or more engine accessories are mounted vertically beneath the core cowl.

3. A gas turbine engine (10) according to claim 1 or 2, wherein the heatshield (48) is formed as a corrugated sheet.

4. A gas turbine engine (10) according to any one of the previous claims, wherein the one or more engine accessories (40, 42) include an engine accessory gearbox (40) driven by a take-off from the core shaft.

5. A gas turbine engine (10) according to claim 4, wherein the engine accessory gearbox (40) includes a train of spur gears which transfer the drive to other engine accessories (42), the spur gears being arranged in a line and having axes of rotation which extend perpendicularly to the principal rotation axis of the engine.

6. A gas turbine engine (10) according to claim 5, wherein the train of spur gears is mounted along a central spine member (52), the other engine accessories (42) projecting from opposite sides of the spine member (52) and the heatshield (48) being supported along a top surface of the spine member (52).

7. A gas turbine engine (10) according to any one of the previous claims, further including an aerodynamic cowl (46) which surrounds the engine core (11), the core casings (44) and the one or more engine accessories (40, 42).

8. A gas turbine engine (10) according to any one of the previous claims, further including a propulsive fan (23) located upstream of the engine core, the fan generating a core airflow which enters the core engine and a bypass airflow which enters a bypass duct (22) surrounding the engine core (11).

9. A gas turbine engine (10) according to claim 8, further including a power gearbox (30) that receives an input from the core shaft (26) and outputs drive to the fan (23) so as to drive the fan at a lower rotational speed than the core shaft.
